# FASCICULE DE BREVET EUROPEEN

(11) **EP 1 796 940 B1**
(45) Date de publication et mention de la délivrance du brevet: **27.04.2011**
(21) Numéro de dépôt: 05786861.4
(22) Date de dépôt: 05.09.2005
(51) Int. Cl.: B60Q 3/02

(54) **DISPOSITIF D'ECLAIRAGE POUR VEHICULE AUTOMOBILE**
BELEUCHTUNGSVORRICHTUNG FÜR KRAFTFAHRZEUG
LIGHTING DEVICE FOR MOTOR VEHICLE

(30) Priorité: 22.09.2004 FR 0410006
(43) Date de publication de la demande: 20.06.2007
(73) Titulaire: DAV, 94000 Creteil (FR)
(72) Inventeur: VANHELLE, Stéphane, F-74970 MARIGNIER (FR); LAURENT, Patrice, Rés. Le Clos Vully 74250 Viuz en Sallaz (FR)
(74) Mandataire: Croonenbroek, Thomas Jakob
(86) Numéro de dépôt international: PCT/EP2005/054356
(87) Numéro de publication internationale: WO 2006/032605

(56) Documents cités:
- EP-A- 0 642 952
- DE-A1- 10 026 967
- US-A- 5 143 437
- US-A- 5 617 112
- US-B1- 6 243 002
- PATENT ABSTRACTS OF JAPAN vol. 006, no. 207 (M-165), 19 octobre 1982 (1982-10-19) & JP 57 114737 A (NISSAN JIDOSHA KK), 16 juillet 1982 (1982-07-16)

## Description

La présente invention concerne un dispositif d'éclairage pour véhicule automobile.

L'oeil humain ne s'adapte pas immédiatement à un changement brusque de luminosité. Ainsi, une personne est momentanément éblouie lorsqu'elle passe brusquement d'un milieu obscur à un milieu bien éclairé. A l'inverse, une personne ne voit momentanément que du noir lorsqu'elle passe brusquement d'un milieu bien éclairé à un milieu obscur. La durée d'adaptation de l'oeil humain est généralement plus longue lors d'un passage de la clarté à l'obscurité que dans le cas contraire. En général, une personne met 20 à 30 minutes pour s'habituer complètement à l'obscurité.

Un conducteur de véhicule automobile peut être soumis à un changement brusque de luminosité, par exemple lors du passage du véhicule dans un tunnel. De ce fait, le conducteur peut être gêné à l'entrée et à la sortie du tunnel, en particulier lorsque l'ensoleillement est très important à l'extérieur du tunnel. En effet, le conducteur ne perçoit que du noir en entrant dans le tunnel puis est ébloui en sortant de ce tunnel.

On connaît déjà, dans l'état de la technique, un dispositif d'éclairage pour véhicule automobile, du type comportant des moyens d'éclairage d'ambiance de l'intérieur d'un habitacle du véhicule.

Ces moyens d'éclairage d'ambiance sont activés par commande manuelle. Ils sont destinés à émettre, généralement la nuit, une lumière de confort dans l'habitacle. Cette lumière est émise en dehors du champ de vision du conducteur afin de ne pas le gêner.

L'état de la technique le plus poche est représenté par le document EP 0 642 952.

L'invention a notamment pour but d'optimiser le confort visuel d'un conducteur, notamment en facilitant son adaptation aux changements brusques de luminosité.

A cet effet, invention a pour objet un dispositif d'éclairage pour véhicule automobile, du type comportant des moyens d'éclairage d'ambiance de l'intérieur d'un habitacle du véhicule, caractérisé en ce qu'il comprend :
- des moyens de mesure de luminosité, et
- des moyens de commande automatique des moyens d'éclairage d'ambiance en fonction de la luminosité mesurée.

Les moyens de mesure de luminosité permettent notamment de détecter une variation conséquente et rapide de cette luminosité (à l'extérieur ou à l'intérieur de l'habitacle) et de commander les moyens d'éclairage d'ambiance en conséquence. Ainsi, lorsque le véhicule entre dans un tunnel, les moyens d'éclairage d'ambiance sont activés de manière à limiter la variation de luminosité dans l'habitacle ce qui limite la gêne du conducteur.

Un dispositif d'éclairage pour véhicule automobile selon l'invention est défini dans la revendication 1 et peut en outre comporter l'une ou plusieurs des caractéristiques suivantes :
- les moyens de commande activent les moyens d'éclairage d'ambiance lorsque la luminosité mesurée est inférieure à un seuil prédéterminé ;
- les moyens de commande comportent des moyens de traitement de la luminosité mesurée, permettant de déterminer un paramètre de commande des moyens d'éclairage à partir d'une variation de la luminosité mesurée ;
- les moyens de réglage comprennent des moyens de temporisation imposant un temps de passage prédéterminé de l'intensité lumineuse des moyens d'éclairage entre les première et seconde valeurs ;
- le dispositif comprend des moyens de mémorisation de la seconde valeur d'intensité lumineuse ;
- le dispositif comprend des moyens de détermination de la seconde valeur d'intensité lumineuse en fonction de la luminosité mesurée ;
- le dispositif comporte des moyens de réglage d'une longueur d'onde d'une lumière émise par les moyens d'éclairage ;
- le dispositif comporte des moyens de commande de moyens d'éclairage de l'extérieur du véhicule en fonction de la luminosité mesurée ;
- les moyens de mesure de luminosité sont destinés à mesurer une luminosité extérieure du véhicule ;
- les moyens de mesure de luminosité comportent des moyens de détection de la présence d'un tunnel en avant d'un véhicule, par exemple des premier et second capteurs de luminosité ayant, respectivement, un champ de détection dirigé en avant du véhicule et un champ de détection dirigé vers le haut.

L'invention sera mieux comprise à la lecture de la description qui va suivre, donnée uniquement à titre d'exemple et faite en se référant aux dessins annexés dans lesquels :
- la figure 1 est un schéma d'un dispositif d'éclairage de véhicule automobile selon un mode de réalisation de l'invention ;
- la figure 2 représente deux courbes d'évolution de la luminosité ou intensité lumineuse à l'intérieur d'un habitacle du véhicule automobile, respectivement avec et sans le dispositif d'éclairage de la figure 1.

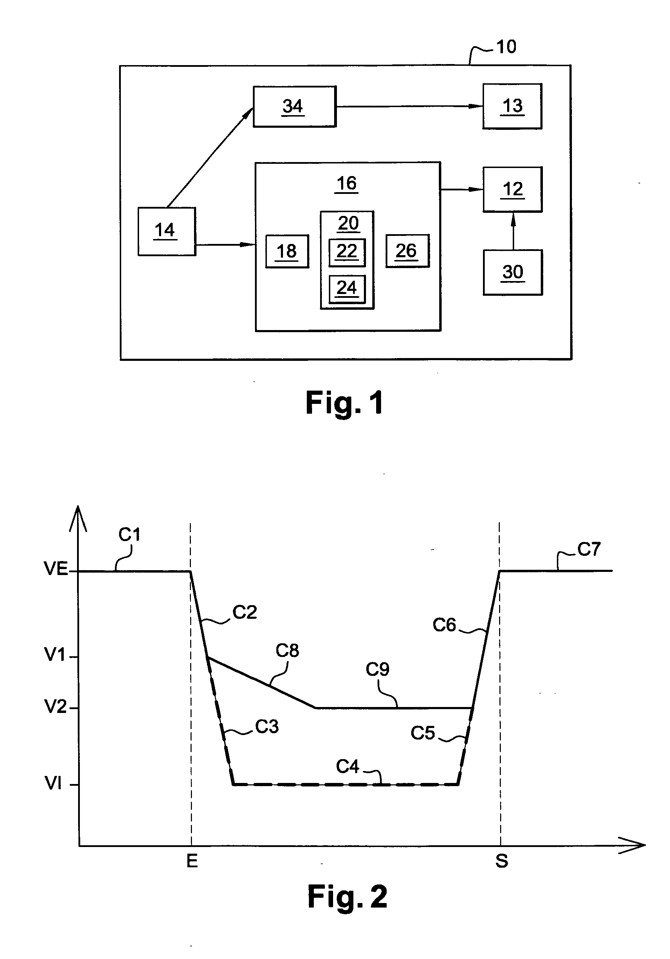

On a représenté schématiquement sur la figure 1 un dispositif 10 d'éclairage pour un véhicule automobile.

Ce dispositif d'éclairage 10 comporte des moyens classiques 12 d'éclairage d'ambiance de l'intérieur d'un habitacle du véhicule automobile, et des moyens classiques 13 d'éclairage de l'extérieur du véhicule. Le conducteur doit généralement activer ces moyens d'éclairage d'extérieur 13 lorsque la luminosité extérieure au véhicule est faible.

On notera que les moyens d'éclairage d'ambiance 12 sont destinés à diffuser à l'intérieur de l'habitacle, dans certaines situations, une lumière, généralement tamisée, pour le confort visuel des occupants du véhicule, en particulier des passagers. Les moyens d'éclairage d'ambiance 12 sont disposés en dehors du champ de vision du conducteur afin de ne pas le gêner.

Les moyens d'éclairage d'ambiance 12 sont commandés en fonction de variations brusques de luminosité telles que par exemple les variations de luminosité qui interviennent lors du passage du véhicule automobile dans un tunnel.

A cet effet, le dispositif d'éclairage 10 comprend des moyens 14 de mesure d'une luminosité et des moyens 16 de commande des moyens d'éclairage d'ambiance 12 en fonction de la luminosité mesurée par les moyens 14.

De préférence, les moyens 14 de mesure de luminosité comprennent un capteur d'ensoleillement, par exemple une photodiode, susceptible de mesurer la luminosité extérieure au véhicule. En variante, les moyens 14 de mesure de luminosité peuvent comporter un capteur de luminosité intérieure au véhicule.

Les moyens de commande 16 comportent des moyens 18 de traitement de la luminosité extérieure mesurée par les moyens 14. En général, les moyens de traitement 18 permettent de déterminer un paramètre de commande des moyens d'éclairage 12 à partir d'une variation de la luminosité mesurée.

Ainsi, les moyens de commande 16 peuvent activer les moyens d'éclairage 12 seulement lorsque la luminosité devient brusquement inférieure à un seuil prédéterminé, par exemple lorsque le véhicule entre dans un tunnel.

En variante, les moyens de commande 16 peuvent activer les moyens d'éclairage d'ambiance 12 lorsque la luminosité extérieure est inférieure à un seuil prédéterminé.

Les moyens de commande 16 comportent en outre des moyens 20 de réglage de la luminosité de la lumière émise par les moyens d'éclairage 12 afin que cette luminosité puisse évoluer conformément à une séquence optimisée pour favoriser l'adaptation de l'oeil à un changement de luminosité à l'intérieur de l'habitacle.

Les moyens de réglage 20 comprennent des moyens 22 faisant varier automatiquement la luminosité des moyens d'éclairage 12 entre une première valeur maximale V1 et une seconde valeur V2, inférieure à la première valeur V1. De préférence, la valeur de la luminosité des moyens d'éclairage 12 est maximale (c'est-à-dire égale à V1) en début de période d'éclairage (la période d'éclairage est déclenchée par une brusque chute de luminosité extérieure), ceci afin de limiter la chute de luminosité à l'intérieur de l'habitacle en début de période d'activation de l'éclairage d'ambiance.

Le cas échéant, les moyens de réglage 20 comprennent des moyens de temporisation 24 imposant un temps prédéterminé de passage de la luminosité des moyens d'éclairage 12 entre les première V1 et seconde V2 valeurs.

La seconde valeur V2 de la luminosité est généralement prédéterminée. Dans ce cas, les moyens de commande 16 comportent des moyens 26 de mémorisation de la seconde valeur V2. Cette seconde valeur V2 est généralement celle utilisée pour l'éclairage d'ambiance de nuit.

En variante, la seconde valeur V2 de la luminosité peut être déterminée en fonction de la luminosité extérieure mesurée par les moyens de mesure 14.

Le dispositif d'éclairage 10 comporte de préférence des moyens 30 de réglage d'une longueur d'onde de la lumière émise par les moyens d'éclairage 12. Ainsi, la couleur de la lumière émise par les moyens d'éclairage 12 peut être réglée, par exemple par une commande actionnée manuellement par le conducteur.

Le dispositif d'éclairage 10 comporte de préférence également des moyens 34 de commande des moyens d'éclairage extérieur 13 en fonction de la luminosité extérieure mesurée par les moyens 14.

Dans un mode de réalisation non représenté, les moyens de commande 16 des moyens d'éclairage intérieur 12 peuvent être utilisés pour commander les moyens d'éclairage extérieur 13.

La figure 2 montre deux courbes représentant l'évolution de la luminosité ou intensité lumineuse (en ordonnées) dans un habitacle de véhicule lorsque ce véhicule traverse un tunnel (entrée E et sortie S du tunnel en abscisses).

La première courbe comporte des portions C1, C2, C3, C4, C5, C6 et C7 représentant la luminosité dans l'habitacle d'un véhicule automobile ne comportant pas de dispositif d'éclairage 10 selon l'invention.

La portion C1 correspond au véhicule automobile évoluant à l'extérieur du tunnel, par exemple en plein jour. La luminosité dans l'habitacle, notée VE sur le dessin, correspond sensiblement à la luminosité extérieure.

La fin de la portion C1 correspond au véhicule entrant en E dans le tunnel. La luminosité baisse alors (portions C2 et C3) jusqu'à une valeur, notée VI sur le dessin, correspondant à la luminosité dans l'habitacle lorsque le véhicule est à l'intérieur du tunnel.

La portion C4 correspond au véhicule évoluant dans le tunnel.

La fin de la portion C4 correspond au véhicule se rapprochant de la sortie du tunnel. La luminosité augmente peu à peu (portions C5 et C6) jusqu'à atteindre la valeur VE à la sortie S du tunnel.

La seconde courbe comporte les portions C1, C2, C6 et C7 et des portions C8 et C9 représentant la luminosité dans l'habitacle d'un véhicule automobile équipé du dispositif d'éclairage 10 selon l'invention.

Lorsque le véhicule entre dans le tunnel en E, les moyens de mesure 14 détectent une baisse de la luminosité extérieure.

Lorsque cette luminosité extérieure est inférieure à un seuil prédéterminé, ou lorsque les moyens de mesure de variation 18 détectent une variation supérieure à un seuil prédéterminé, les moyens de commande 16 commandent l'allumage des moyens d'éclairage 12.

La luminosité dans l'habitacle du véhicule automobile ne descend alors pas au delà de la valeur V1 (le véhicule entre dans le tunnel) correspondant à la valeur maximale de la luminosité des moyens d'éclairage 12. On notera qu'ainsi, l'oeil du conducteur ne subit pas une baisse de luminosité aussi brusque que dans le cas précédent (sans le dispositif d'éclairage selon l'invention).

Sur la portion de courbe C8, la luminosité des moyens d'éclairage 12 diminue progressivement depuis la valeur V1 jusqu'à la valeur V2, ceci pendant un temps prédéterminé imposé par les moyens de temporisation 26.

Cette luminosité V2 reste sensiblement constante dans l'habitacle alors que le véhicule évolue dans le tunnel (portion de courbe C9).

Lorsque le véhicule se rapproche de la sortie S du tunnel, la luminosité augmente peu à peu (portions C6) jusqu'à atteindre la valeur VE en sortie de tunnel (portion C7). Les moyens de mesure de luminosité 14 détectent à nouveau une luminosité élevée et les moyens de commande 16 commandent l'extinction des moyens d'éclairage 12.

On notera que, grâce à l'invention, l'oeil du conducteur ne subit pas de changement de luminosité trop important aussi bien en entrée qu'en sortie du tunnel.

Selon une variante perfectionnée, les moyens 14 de mesure de luminosité sont adaptés pour détecter en avance la présence d'un tunnel en avant du véhicule. Les moyens 14 de mesure de luminosité réalisent alors une fonction supplémentaire de détection de présence de tunnel.

Dans ce cas, les moyens 14 de mesure de luminosité comportent des premier et second capteurs de luminosité, ayant respectivement un champ de détection dirigé en avant du véhicule et un champ de détection dirigé vers le haut. La présence d'un tunnel est ainsi détectée lorsque le premier capteur de luminosité détecte une baisse significative de la luminosité qu'il mesure en dessous d'un seuil prédéterminé alors que la luminosité mesurée par le second capteur reste constante.

Des moyens 14 de mesure de luminosité de ce type permettent d'anticiper la commande des moyens d'éclairage 12, et ainsi d'augmenter davantage le confort visuel de conducteur lors du passage du véhicule dans un tunnel.

## Revendications

1. Dispositif (10) d'éclairage pour véhicule automobile, du type comportant des moyens (12) d'éclairage d'ambiance de l'intérieur d'un habitacle du véhicule, comprenant
- des moyens (14) de mesure de luminosité, et
- des moyens (16) de commande automatique des moyens (12) d'éclairage d'ambiance en fonction de la luminosité mesurée,
les moyens de commande (16) étant conçus pour activer les moyens d'éclairage d'ambiance (12) en fonction de la luminosité mesurée,
les moyens de commande (16) comportant des moyens (20) de réglage d'une intensité lumineuse d'une lumière émise par les moyens d'éclairage, les moyens (20) de réglage comprenant des moyens (22) faisant varier automatiquement l'intensité lumineuse des moyens d'éclairage (12) entre une première valeur (V1) maximale et une seconde valeur (V2) inférieure à la première, **caractérisé en ce que** la valeur de l'intensité lumineuse des moyens d'éclairage (12) est maximale en début de période d'éclairage.

2. Dispositif (10) d'éclairage selon la revendication 1, **caractérisé en ce que** les moyens de commande (16) activent les moyens (12) d'éclairage d'ambiance lorsque la luminosité mesurée est inférieure à un seuil prédéterminé.

3. Dispositif (10) d'éclairage selon la revendication 1 ou 2, **caractérisé en ce que** les moyens de commande comportent des moyens (18) de traitement de la luminosité mesurée, permettant de déterminer un paramètre de commande des moyens d'éclairage (12) à partir d'une variation de la luminosité mesurée.

4. Dispositif (10) d'éclairage selon l'une quelconque des revendications précédentes, **caractérisé en ce que** les moyens de réglage (20) comprennent des moyens (24) de temporisation imposant un temps de passage prédéterminé de l'intensité lumineuse des moyens d'éclairage (12) entre les première (V1) et seconde (V2) valeurs.

5. Dispositif (10) d'éclairage selon l'une quelconque des revendications 1 à 4, **caractérisé en ce qu'**il comprend des moyens (26) de mémorisation de la seconde valeur (V2) d'intensité lumineuse.

6. Dispositif (10) d'éclairage selon l'une quelconque des revendications 1 à 4, **caractérisé en ce qu'**il comprend des moyens de détermination de la seconde valeur (V2) d'intensité lumineuse en fonction de la luminosité mesurée.

7. Dispositif (10) d'éclairage selon l'une quelconque des revendications précédentes, **caractérisé en ce qu'**il comporte des moyens (30) de réglage d'une longueur d'onde d'une lumière émise par les moyens d'éclairage (12).

8. Dispositif (10) d'éclairage selon l'une quelconque des revendications précédentes, **caractérisé en ce qu'**il comporte des moyens (34) de commande de moyens d'éclairage (32) de l'extérieur du véhicule en fonction de la luminosité mesurée.

9. Dispositif (10) d'éclairage selon l'une quelconque des revendications précédentes, **caractérisé en ce que** les moyens (14) de mesure de luminosité sont destinés à mesurer une luminosité extérieure au véhicule.

10. Dispositif (10) d'éclairage selon la revendication 9, **caractérisé en ce que** les moyens (14) de mesure de luminosité comportent des moyens de détection de la présence d'un tunnel en avant d'un véhicule, par exemple des premier et second capteurs de luminosité ayant, respectivement, un champ de détection dirigé en avant du véhicule et un champ de détection dirigé vers le haut.

## Claims

1. Lighting device (10) for motor vehicles, of the type comprising ambient lighting means (12) for the interior of a vehicle passenger compartment, comprising:
- means (14) of measuring brightness, and
- means (16) of automatically controlling the ambient lighting means (12) based on the measured brightness,
the control means (16) being designed to activate the ambient lighting means (12) based on the measured brightness,
the control means (16) comprising means (20) of adjusting a light intensity of a light emitted by the lighting means, the adjustment means (20) comprising means (22) that automatically vary the light intensity of the lighting means (12) between a first maximum value (V1) and a second value (V2) less than the first, **characterized in that** the value of the light intensity of the lighting means (12) is maximum at the start of a lighting period.

2. Lighting device (10) according to Claim 1, **characterized in that** the control means (16) activate the ambient lighting means (12) when the measured brightness is less than a predetermined threshold.

3. Lighting device (10) according to Claim 1 or 2, **characterized in that** the control means comprise means (18) of processing the measured brightness, making it possible to determine a control parameter for the lighting means (12) based on a variation in the measured brightness.

4. Lighting device (10) according to any one of the preceding claims, **characterized in that** the adjustment means (20) comprise timer means (24) imposing a predetermined transition time for the light intensity of the lighting means (12) between the first (V1) and second (V2) values.

5. Lighting device (10) according to any one of Claims 1 to 4, **characterized in that** it comprises means (26) of memorizing the second light intensity value (V2).

6. Lighting device (10) according to any one of Claims 1 to 4, **characterized in that** it comprises means of determining the second light intensity value (V2) based on the measured brightness.

7. Lighting device (10) according to any one of the preceding claims, **characterized in that** it comprises means (30) of adjusting a wavelength of a light emitted by the lighting means (12).

8. Lighting device (10) according to any one of the preceding claims, **characterized in that** it comprises means (34) of controlling means (32) of lighting the exterior of the vehicle based on the measured brightness.

9. Lighting device (10) according to any one of the preceding claims, **characterized in that** the brightness measuring means (14) are intended to measure a brightness outside the vehicle.

10. Lighting device (10) according to Claim 9, **characterized in that** the brightness measuring means (14) comprise means of detecting the presence of a tunnel in front of a vehicle, for example first and second brightness sensors having, respectively, a detection field directed in front of the vehicle and a detection field directed upward.

## Patentansprüche

1. Beleuchtungsvorrichtung (10) für ein Kraftfahrzeug von der Art, die Einrichtungen (12) zur ambienten Beleuchtung des Inneren eines Fahrzeuginnenraums aufweist, die enthält:
- Einrichtungen (14) zur Helligkeitsmessung, und
- Einrichtungen (16) zur automatischen Steuerung der Einrichtungen (12) zur ambienten Beleuchtung in Abhängigkeit von der gemessenen Helligkeit,
wobei die Steuereinrichtungen (16) konzipiert sind, um die Einrichtungen (12) zur ambienten Beleuchtung abhängig von der gemessenen Helligkeit zu aktivieren,
wobei die Steuereinrichtungen (16) Einrichtungen (20) zur Regelung einer Lichtstärke eines von den Beleuchtungseinrichtungen emittierten Lichts aufweisen, wobei die Regeleinrichtungen (20) Einrichtungen (22) enthalten, die die Lichtstärke der Beleuchtungseinrichtungen (12) automatisch zwischen einem ersten maximalen Wert (V1) und einem zweiten Wert (V2) geringer als der erste variieren, **dadurch gekennzeichnet, dass** der Wert der Lichtstärke der Beleuchtungseinrichtungen (12) zu Beginn der Beleuchtungsperiode maximal ist.

2. Beleuchtungsvorrichtung (10) nach Anspruch 1, **dadurch gekennzeichnet, dass** die Steuereinrichtungen (16) die Einrichtungen (12) zur ambienten Beleuchtung aktivieren, wenn die gemessene Helligkeit geringer als ein vorbestimmter Schwellwert ist.

3. Beleuchtungsvorrichtung (10) nach Anspruch 1 oder 2, **dadurch gekennzeichnet, dass** die Steuereinrichtungen Einrichtungen (18) zur Verarbeitung der gemessenen Helligkeit aufweisen, die es ermöglichen, einen Steuerparameter der Beleuchtungseinrichtungen (12) ausgehend von einer Veränderung der gemessenen Helligkeit zu bestimmen.

4. Beleuchtungsvorrichtung (10) nach einem der vorhergehenden Ansprüche, **dadurch gekennzeichnet, dass** die Regeleinrichtungen (20) Verzögerungseinrichtungen (24) enthalten, die eine vorbestimmte Übergangszeit der Lichtstärke der Beleuchtungseinrichtungen (12) zwischen dem ersten (V1) und dem zweiten Wert (V2) vorgeben.

5. Beleuchtungsvorrichtung (10) nach einem der Ansprüche 1 bis 4, **dadurch gekennzeichnet, dass** sie Speichereinrichtungen (26) des zweiten Lichtstärkewerts (V2) enthält.

6. Beleuchtungsvorrichtung (10) nach einem der Ansprüche 1 bis 4, **dadurch gekennzeichnet, dass** sie Einrichtungen zur Bestimmung des zweiten Lichtstärkewerts (V2) in Abhängigkeit von der gemessenen Helligkeit enthält.

7. Beleuchtungsvorrichtung (10) nach einem der vorhergehenden Ansprüche, **dadurch gekennzeichnet, dass** sie Einrichtungen (30) zur Regelung einer Wellenlänge eines von den Beleuchtungseinrichtungen (12) emittierten Lichts enthält.

8. Beleuchtungsvorrichtung (10) nach einem der vorhergehenden Ansprüche, **dadurch gekennzeichnet, dass** sie Steuereinrichtungen (34) von Beleuchtungseinrichtungen (32) der Außenseite des Fahrzeugs in Abhängigkeit von der gemessenen Helligkeit enthält.

9. Beleuchtungsvorrichtung (10) nach einem der vorhergehenden Ansprüche, **dadurch gekennzeichnet, dass** die Einrichtungen (14) zur Helligkeitsmessung dazu bestimmt sind, eine Helligkeit außerhalb des Fahrzeugs zu messen.

10. Beleuchtungsvorrichtung (10) nach Anspruch 9, **dadurch gekennzeichnet, dass** die Einrichtungen (14) zur Helligkeitsmessung Einrichtungen zur Erfassung des Vorhandenseins eines Tunnels vor einem Fahrzeug aufweisen, zum Beispiel erste und zweite Helligkeitssensoren, die ein vor das Fahrzeug gerichtetes Erfassungsfeld bzw. ein nach oben gerichtetes Erfassungsfeld haben.
